# EUROPEAN PATENT APPLICATION

(11) **EP 4 725 629 A1**
(43) Date of publication of application: **15.04.2026**
(21) Application number: 25205997.7
(22) Date of filing: 21.09.2015
(51) Int. Cl.: B23G 5/06, B22F 3/11, B22F 5/10, B22F 10/20, B23P 15/52, B33Y 80/00, B22F 10/66, B22F 5/00

(54) **THREAD CUTTING TAP AND METHOD OF PRODUCING THE SAME**

(30) Priority: 23.09.2014 DK PA201470585
(62) Divisional of application: 15777869.7
(71) Applicant: Rosenvinge Thürco Fam. ApS, 3250 Gilleleje (DK)
(72) Inventor: Rosenvinge, Ingeborg, 3250 Gilleleje (DK)
(74) Representative: Høiberg P/S

(57) **Abstract**

The present disclosure relates to a lightweight thread cutting tap having a body, comprising at a first end a connector portion, and, at a second end, a threaded portion for cutting a thread of an opening in which said threaded portion is to be introduced, said threaded portion terminating in a bottom end, said threaded portion having at least two cutting edges in the circumferential direction of said body, each of said cutting edges being an integral peripheral part of a flank portion extending substantially radially from the longitudinal extension of said body; and a plurality of chip removal flutes between said flanks, said flutes extending in the longitudinal direction from said bottom end, said thread cutting tap having a hollow interior, wherein the body forms a sidewall and the hollow interior extends into the threaded portion.

## Description

The present invention relates to a thread cutting tap and a method for manufacturing a thread cutting tap.

### Background of invention

The universal use of the screw thread, combined with the numerous conditions under which it is used, has led to the development of different kinds of tools and machines for forming screw threads.

Methods for generating threads include deformative or transformative methods such as rolling, forming, molding and casting, as well as subtractive methods such as cutting and grinding. Under the tools used for subtractive methods, thread cutting taps are sharply carved and hardened metallic shaft-like devices used for cutting internal screw threads. They are typically made of hardened and tempered steel. Thread cutting taps are often operated with a coolant or a cooling lubricant which is intended to reduce the friction between tool and workpiece, remove process heat from the contact point, transport chips and achieve a good surface quality. Because of the type of steel and heat treatment required to enable them to cut metal the thread cutting taps may be brittle.

There are a number of problems associated with the use of these thread cutting taps related to requirements on precise operation and the mechanical load and strain they are exposed to. The supply of coolant and/or lubricant is difficult because during the cutting the tool is almost completely surrounded by the material to be worked. Thus, the blades formed by the threading part are in general not easily accessible. Consequences of poor coolant and/or lubricant supply are too much friction, vibrations and heat development, which may cause the tap to break or wear out. A further issue related to lubrication/cooling is related to ensuring an adequate pressure of the lubricant. The consequences of low pressure of the lubricant are also increased friction, vibrations and heat.

Transportation of chips is another issue. If the chips are not removed efficiently from the section near the cutting edges there is a risk of chip jamming. Chip jamming slows down the threading process and may blunt the cutting edges. The tap may have to be removed and reinserted. The tap may also be damaged or break upon chip jamming.

Furthermore the taps are heavy to transport, both when it comes to hand carrying a number of taps in various sizes, or, at a larger scale, shipping larger quantities using air cargo or ships. Thread cutting taps are used continuously in relation to construction and maintenance of many types of machinery and in many cases the weight of the tap is an issue, e.g. in relation to use in space stations and maintenance of wind turbines.

These and other issues and inconveniences of thread cutting taps are addressed in the present disclosure.

### Summary of invention

The present disclosure relates to a thread cutting tap. In a first embodiment the thread cutting tap has a body, comprising at a first end a connector portion, and at a second end a threaded portion for cutting a thread of an opening in which said threaded portion is to be introduced, and a plurality of chip removal flutes for transportation of chips. The present invention relates to the thread cutting tap having a hollow interior, wherein the body forms a sidewall, which makes the tap lighter than a regular tap without a hollow interior, and enables a possibility to supply lubricant and coolant through the tap. A hollow interior also has a cooling effect on the tap, saves material in comparison to a regular solid tap and is lighter than a regular solid tap. The tap may also be designed, preferably using three-dimensional printing techniques, such that an optimal flow of lubricant and/or coolant through the hollow interior can be achieved. The hollow interior preferably extends into the threaded portion of the tap, and/or is extended in regular or irregular shapes into the flank portion. This has not been possible before the introduction of three-dimensional printing techniques and opens for the hollow interior being in fluid connection with nozzles on the threaded portion of the tap in various shapes.

The tap may be provided with a shaft, e.g. an elongated shaft, located between the threaded portion and the connector portion, i.e. the shaft is part of the body of the tap. With a shaft the tap may be ready for connection to a rotating device via the connector portion. Without the shaft the tap may also be ready for connection to a rotating device via the connector portion, however typically the tap is then connected to the rotating device via an extender located between the rotating device and the connector portion.

For small and medium taps the shaft is typically an integral part of the tap. Larger taps are often not provided with a shaft as an integral part.

The presently disclosed invention also relates to at least a part of the body being a grid structure, said grid structure comprising a solid portion of straight and/or curved bars, and a hollow portion of sections between the bars. With a part of the body being a grid structure the body becomes lighter than a regular tap. This also means an additional saving of material. A combination of the tap having a hollow interior and the abovementioned grid structure in the sidewalls is a particularly light embodiment. The grid structure may form a triangular pattern, and/or a hexagonal pattern, and/or a three-dimensional pattern, or a combination thereof. A hexagonal pattern, also known as honey comb structure, is known for having a very high strength-to-weight ratio. The present invention also relates to the grid structure being stronger (reinforced) in some sections and/or lighter in some sections.

A further aspect of the presently disclosed invention relates to the thread cutting tap further comprising one or more nozzles in the sidewall in fluid connection with the hollow interior of the thread cutting tap, for directing and/or controlling the flow of a lubricant and/or coolant from the hollow interior. The nozzles may be configured to direct the flow of lubricant/coolant in specific directions, e.g. away from the cutting edges towards the connector portion, thereby assisting the transportation of chips backward in the longitudinal working direction of the tap. The nozzles together with the hollow interior ensure optimized lubrication and cooling for the thread cutting tap during use. As a consequence, there is less friction during operation than in a conventional thread cutting tap. The nozzles are preferably small, in particular the outlet diameter is preferably small. The form of at least a part of the nozzles may be cone shaped and generally designed such that a high flow and high pressure is achieved at the outlet of the nozzles. Provision of nozzles in the sidewall of a thread cutting tap is very difficult and has been provided with the advent of 3D printing.

The present disclosure also relates to a method for manufacturing a thread cutting tap, using additive manufacturing, e.g. in the form of a three-dimensional printing device, comprising the steps of creating or providing a three-dimensional model of the thread cutting tap; converting the model into a series of thin slices, wherein the slices are perpendicular to the longitudinal extension of the body; printing the slices as successive layers of metal, thereby shaping the thread cutting tap. The manufacturing method is a result of the inventors realizing that the abovementioned grid structures and/or hollow interior and/or cooling channels and nozzles in different shapes and sizes can be manufactured with modern additive manufacturing techniques, such as three-dimensional printing.

### Description of drawings

The invention will in the following be described in greater detail with reference to the accompanying drawings. The drawings are exemplary and are intended to illustrate some of the features of the present thread cutting tap, and are not to be construed as limiting to the presently disclosed invention.
**Fig. 1** shows a front view of an embodiment of the presently disclosed thread cutting tap comprising a shaft.
**Fig. 2** shows a cross section of an embodiment of a thread cutting tap with a hollow interior, a grid structure, and helically shaped chip removal flutes.
**Fig. 3** shows a perspective view from the front and below of an embodiment of a thread cutting tap with helically shaped chip removal flutes.
**Fig. 4** shows a cross section of the threaded portion of an embodiment of a thread cutting tap. The cross section is perpendicular to the longitudinal extension of the body.
**Fig. 5** shows a front view of an embodiment of the presently disclosed thread cutting tap having an externally visible grid structure.
**Fig. 6** shows a cross section of an embodiment of a threaded portion of a thread cutting tap with a hollow interior, a grid structure, and nozzles.

### Detailed description of the invention

A first embodiment of the presently disclosed invention relates to a thread cutting tap having a body, comprising at a first end a connector portion, and at a second end a threaded portion for cutting a thread of an opening in which said threaded portion is to be introduced, said threaded portion terminating in a bottom end, said threaded portion having at least two cutting edges in the circumferential direction of said body, each of said cutting edges being an integral peripheral part of a flank portion extending substantially radially from the longitudinal extension of said body, and a plurality of chip removal flutes between said flanks, said flutes extending in the longitudinal direction from said bottom end. The thread cutting tap may have a hollow interior, wherein the body forms a sidewall.

The hollow interior is preferably extended into the threaded portion of the tap, and/or is extended in regular or irregular shapes into the flank portion. This has not been possible before the introduction of three-dimensional printing techniques and opens for the hollow interior being in fluid connection with nozzles on the threaded portion of the tap in various shapes.

The present invention relates to the thread cutting tap having a hollow interior, which makes the tap lighter than a regular tap without a hollow interior, and enables a possibility to supply lubricant and coolant through the tap. In the embodiment having a hollow interior, wherein the body forms a sidewall, the sidewall can be designed thin, with a thickness of the sidewall is in the range of 0.1 mm - 3.0 mm, such as in the range of 0.1 mm - 1.0 mm, or in the range of 0.5 mm - 1.0 mm, or in the range of 1.0 mm - 2.0 mm, or in the range of 1.0 mm - 3.0 mm, for example 0.1 mm, or 0.5 mm, or 1.0 mm, or 1.1 mm, or 1.2 mm, or 1.3 mm, or 1.4 mm, or 1.5 mm, or 2.0 mm, or 2.5 mm, or 3.0 mm. A thinner sidewall means a larger interior space of the tap, which enables the use of more lubricant. A larger hollow interior also has a cooling effect on the tap. Furthermore, the hollow interior may save a considerable amount of material in comparison to a regular solid tap and is lighter than a regular solid tap.

The inventors have also realized that by having a hollow interior the tap may also be designed, preferably using modern three-dimensional printing techniques, such that an optimal flow of lubricant and/or coolant through the hollow interior can be achieved. If a coolant and/or lubricant is present in the hollow interior, the pressure from the coolant and/or lubricant may serve as a counter pressure from the interior of the body, which compensates for the mechanical pressure that may be present from the outside of the body. The hollow interior may be shaped such that it can both resist high internal pressure from the lubricant and have a low pressure drop in relation to the lubrication of the cutting. Further advantages of the hollow design are that more efficient cooling is achieved and less vibrations is experienced in the thread cutting tap during operation.

Logically a tap having a larger radius needs a thicker sidewall to fulfil the requirements on strength. Therefore the thickness of the sidewall is less than 60% of the radius of the tap, or less than 50% of the radius of the tap, or less than 40% of the radius of the tap, or less than 30% of the radius of the tap, or less than 25% of the radius of the tap, or less than 20% of the radius of the tap, or less than 15% of the radius of the tap, or less than 10% of the radius of the tap, or less than 5% of the radius of the tap.

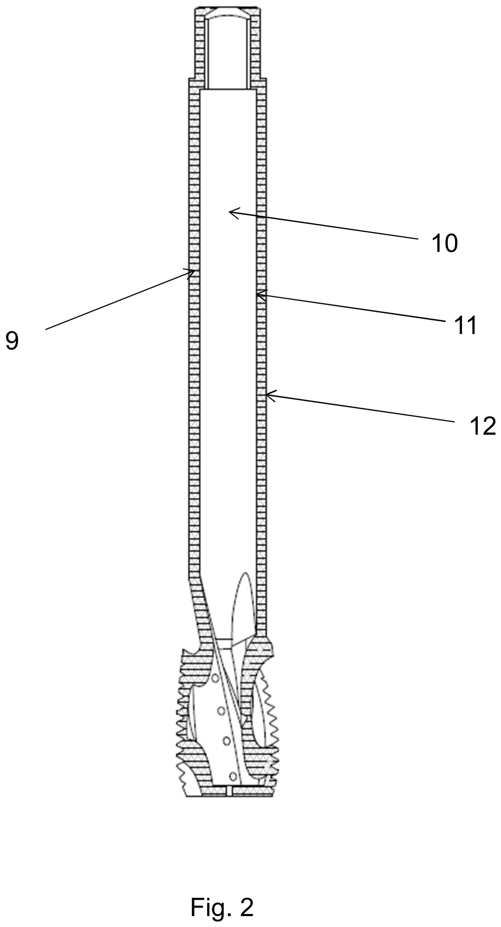

In the presently disclosed invention at least a part of the body is a grid structure, said grid structure comprising a solid portion of straight and/or curved bars, and a hollow portion of sections between the bars. This has the advantage that the tap can be made very light. Fig. 2 can serve as an example to illustrate how a part, in this case the sidewall 9 around the hollow interior 10 of the body, including the shaft, comprises a grid structure. A consequence of a part of the body being a grid structure is that the body is not solid and thus lighter than a regular tap. This also means an additional saving of material. A combination of the tap the having a hollow interior and the abovementioned grid structure in the sidewalls is a particularly light embodiment. The grid structure is not limited to the sidewall, but could be any part of the body.

In one embodiment the shaft with the hollow interior has a substantially flat interior surface. This can be seen as a way of covering and/or sealing the grid structure from the interior and having a smooth interior surface to achieve an adequate flow of lubricant and/or cooling. An example of a flat interior surface 11 is shown in fig.2. Alternatively, if there is no flat interior surface, the grid may also be directly exposed to the hollow interior of the body.

The body may also have a substantially flat exterior surface. An example of a flat exterior surface 12 is shown in fig. 2. It may be advantageous to cover or seal the grid structure with an exterior, flat surface in order to avoid that particles or objects get stuck in the grid structure. In general a smooth surface minimizes friction during operation.

As stated, the grid structure may be a somewhat complex structure to manufacture with conventional manufacturing methods. The inventors have realized that with modern three-dimension printing techniques it is possible to achieve the grid structure according to the present invention. As stated, the grid structure may have a solid portion of straight and/or curved bars, and a hollow portion of sections between the bars. A broad interpretation should be given to the straight and/or curved bars, basically covering any structural design of the solid and hollow portions. In one embodiment the grid structure forms a triangular pattern, and/or a hexagonal pattern, and/or a three-dimensional pattern, or a combination. The honey comb structure has the geometry of a honeycomb, which is known for having a very high strength-to-weight ratio. The inventors have realized that this grid structure can be used for the grid structure in the body to reduce weight and material cost, while maintaining a good strength in the construction, but in principle any three-dimensional structure could be used.

Another aspect of the present invention relates to selecting an adequate level of solid portion versus hollow portion. Using a smaller percentage of solid gives a lighter constructing, while using a higher percentage gives a stronger but heavier construction. **In** one embodiment of the presently disclosed invention the solid portion constitutes less than 50%, or less than 45%, or less than 45%, or less than 40%, or less than 35%, or less than 30%, or less than 25%, or less than 20%, or less than 15%, or less than 10%, or less than 9%, or less than 8%, or less than 7%, or less than 6%, or less than 5%, or less than 4%, or less than 3%, or less than 2%, or less than 1% of the total volume of the grid structure.

The loads and/or mechanical stress and/or strain are typically not equally distributed over the whole body. The present invention also relates to making the grid structure stronger in some sections and/or lighter in some sections. In the sections exposed to high levels of strain and/or external load and/or stress the ratio between the solid portion and hollow portion of the grid may be changed locally by adding more solid to the structure, for example by having thicker bars. Such a locally modified grid is achievable with 3D printing methods. The solid portion of the grid structure may be reinforced in one or more selected sections of the body such that the solid portion of the volume of the grid structure for the section is in the range of 0-50%, such as in the range of 0-5%, or in the range of 0-10%, or in the range of 0-15%, or in the range of 0-20%, or in the range of 0-25%, or in the range of 0-30%, or in the range of 0-40%, or in the range of 0-50%, or in the range of 1-5%, or in the range of 1-10%, or in the range of 1-10%, or in the range of 1-15%, or in the range of 1-20%, or in the range of 1-25%, or in the range of 1-30%, or in the range of 1-40%, or in the range of 1-50%, for example 1%, or 2%, or 2%, or 3%, or 4%, or 5%, or 10%, or 20%, or 30%, or 40%, or 50% higher than the average for the whole grid structure.

Similarly, sections less exposed to strain and/or external load and/or stress may be made less dense in one or more selected sections of the body, such that the solid portion of the volume of the grid structure for the section is in the range of 0-50%, such as in the range of 0-5%, or in the range of 0-10%, or in the range of 0-15%, or in the range of 0-20%, or in the range of 0-25%, or in the range of 0-30%, or in the range of 0-40%, or in the range of 0-50%, or in the range of 1-5% or in the range of 1-10%, or in the range of 1-10%, or in the range of 1-15%, or in the range of 1-20%, or in the range of 1-25%, or in the range of 1-30%, or in the range of 1-40%, or in the range of 1-50%, for example 1%, or 2%, or 2%, or 3%, or 4%, or 5%, or 10%, or 20%, or 30%, or 40%, or 50% lower than the average for the whole grid structure. By optimizing the density of the grid structure locally, both the weight and strength of the grid can be optimized.

The thickness of the grid structure may be less than 5.0 mm, or less than 4.5 mm, or less than 4.0 mm, or less than 3.5 mm, or less than 3.0 mm, or less than 2.5 mm, or less than 2.0 mm, or less than 1.5 mm, or less than 1.0 mm, or less than 0.5 mm. The thickness of the grid structure depends on physical requirements such as load, strain and stress but also on the dimensions of the thread cutting tap. The thickness should be adapted to the condition in which the thread cutting tap is to operate.

Preferably the thread cutting tap is made of strong material, and preferably the material is also as light as possible. The thread cutting tap may be made of a material selected from the group of titanium, stainless steel, hard metal, hard alloy, sintered carbides, cemented carbides, tool steel, high-speed steel or cobalt high-speed steel. Titanium is known for having a very high strength-to-density ratio. In its unalloyed condition, titanium is as strong as some steels, but less dense. Also, titanium alloyed with for example iron, aluminum, vanadium or molybdenum may be used. Preferably the material of which the thread cutting tap is made is also corrosion resistive. As stated, the grid structure is part of the body, and thus also included for the above selection of materials.

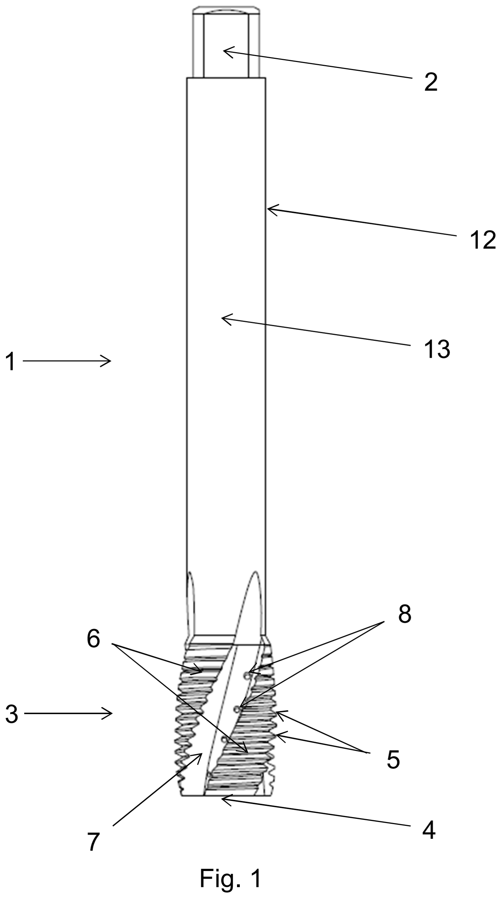

In one embodiment of the present invention the chip removal flutes of the thread cutting tap are helically shaped. Examples of helically shaped chip removal flutes 5 are shown in fig. 1, fig. 2, fig. 3, fig. 4, fig. 5 and fig. 6. Taps with helical flutes are particularly useful for threading in blind holes. The helical flute transports the chips back away from the cutting edges and out of the opening, thus avoids packing of chips in the flutes or at the bottom of the hole. In this way, danger of breaking the tap or damaging the thread is minimized.

**In** another embodiment of the present invention the chip removal flutes of the thread cutting tap are straight, i.e. extending along the longitudinal direction of the tap. Taps with straight flutes are particularly useful for threading in through going holes.

A further aspect of the presently disclosed invention relates to the thread cutting tap further comprising one or more nozzles in the sidewall in fluid connection with the hollow interior of the thread cutting tap, for directing and/or controlling the flow of a lubricant and/or coolant from the hollow interior. In one embodiment the a nozzle may be seen as a channel with an inlet that is larger than the outlet, e.g. a channel connecting the hollow interior of the body with the exterior surface of the body. With the use of 3D printing the freedom to design such nozzles is virtually endless.

Preferably, the nozzles do not contain any additional material, but are integrally joined with the rest of the body. The nozzles may be regarded as extending channels of the hollow interior. Three-dimensional printing techniques allows for precise manufacturing of small nozzles with complex shapes. The inventors have realized that nozzles may be configured to direct the flow of lubricant/coolant away from the cutting edges towards the connector portion, thereby assisting the transportation of chips backward in the longitudinal working direction of the tap. This is typically useful for helical flutes, for which the chips are usually transported back away from the cutting edges. This flow can be achieved for example by pointing the outlet of the nozzle slightly upwards, i.e. towards the connector portion.

The nozzles together with the hollow interior (the latter including cooling channels as part of the hollow interior, supplying lubricant to the nozzles) ensure optimal lubrication and cooling for the thread cutting tap. As a consequence, there is less friction than in a conventional thread cutting tap and the tap does not wear out or break as easily as a conventional tap. Nozzles may further be directed in a direction perpendicular to the longitudinal extension of the body such that the cutting edges can be directly targeted with lubrication during use, the direction may be forward and/or backward in relation to the direction of rotation of the tap.

Alternatively, one or more nozzles may configured to direct the flow of lubricant/coolant away from the cutting edges towards the bottom end, thereby transporting chips forward in the longitudinal working direction of the tap. This is typically useful for straight flutes, for which the chips are usually transported forward during operation.

**In** one embodiment, one or more nozzles are configured to direct the flow of lubricant/coolant away from the cutting edges towards the connector portion, thereby transporting chips backward in the longitudinal working direction of the tap, and wherein one or more nozzles are directed in a direction perpendicular to the longitudinal extension of the body. This specific combination makes it possible to benefit both from optimized lubrication and cooling by nozzles that are directed in a direction perpendicular to the longitudinal extension of the body, and efficient transporting of chips backwards.

A further aspect of the invention relates to having one or more nozzles located in the sidewall towards each chip removal flute. Examples of nozzles 6 located in the sidewall towards the chip removal flutes can be seen in fig. 1-4. This gives the most efficient lubrication of the cutting. Furthermore, the design of the channels (part of the hollow interior) may be designed such that a high flow and high pressure is achieved at the outlet of the nozzles, which improves the lubrication and cooling. By using nozzles having an the outlet diameter of less than 2.0 mm, or less than 1.9 mm, or less than 1.8 mm, or less than 1.7 mm, or less than 1.6 mm, or less than 1.5 mm, or less than 1.4 mm, or less than 1.3 mm, or less than 1.2 mm, or less than 1.1 mm, or less than 1.0 mm, or less than 0.9 mm, or less than 0.8 mm, or less than 0.7 mm, or less than 0.6 mm, or less than 0.5 mm, or less than 0.4 mm, or less than 0.3 mm, or less than 0.2 mm, or less than 0.1 mm, or less than 0.4 mm, high-flow lubrication or mist lubrication can be achieved. In one embodiment a plurality of nozzles are adjacent to the cutting edges. This gives an amplifying showering effect to the flow of lubricant and/or coolant.

The inlet diameters of the nozzles are typically greater than the outlet diameter to achieve higher pressure at the outlet. In one embodiment of the present invention the inlet diameter of the nozzle(s) is greater than 1.0 mm, or less than 1.1 mm, or less than 1.2 mm, or less than 1.3 mm, or less than 1.4 mm, or less than 1.5 mm, or less than 1.7 mm, or less than 2.0 mm, or less than 2.5 mm, or less than 3.0. The ratio between the outlet diameter and the inlet diameter of the nozzles should be such that optimal lubrication and cooling is achieved. Rate of flow, speed, and pressure at the outlet should be taken into account. In one embodiment of the present invention the ratio between the outlet diameter and the inlet diameter of the nozzle(s) is from about 1:2 to about 1:10.

When designing the nozzles a number of shapes and sizes are possible to optimize the abovementioned parameters. In one embodiment of the invention the nozzles are cone shaped. The opening angle of a cone is related to the abovementioned ratios between outlet and inlet diameters. An efficient opening angle of a cone in a nozzle for distributing liquid is in the range of 5° - 20°, such as in the range of 5° - 10°, or in the range of 5° - 15°, or in the range of 10° - 15°, or in the range of 10° - 20°, or in the range of 15° - 20°, for example 5°, or 6°, or 7°, or 8°, or 9°, or 10°, or 11°, or 12°, or 13°, or 14°, or 15°, or 16°, or 17°, or 18°, or 19°, or 20°.

As stated the nozzles may be configured to direct the flow of lubricant/coolant away from the cutting edges towards the connector portion, thereby assisting the transportation of chips backward in the longitudinal working direction of the tap, or, alternatively, configured to direct the flow of lubricant/coolant away from the cutting edges towards the bottom end, thereby transporting chips forward in the longitudinal working direction of the tap. For a cone shaped nozzle the first alternative corresponds to the vertex of the cone pointing in an angle between 1° and 5°, or between 1° and 10°, or between 1° and 20°, or between 1° and 30°, or between 1° and 45°, or between 1° and 60°, or between 10° and 45°, or between 20° and 60°, for example 1°, or 2°, or 3°, or 4°, or 5°, or 10°, or 15°, or 20°, or 30°, or 40°, or 45°, or 50°, or 60° from a transversal extension of the body towards the connector portion. The second alternative corresponds to the vertex of the cone pointing in an angle between 1° and 5°, or between 1° and 10°, or between 1° and 20°, or between 1° and 30°, or between 1° and 45°, or between 1° and 60°, or between 10° and 45°, or between 20° and 60°, for example 1°, or 2°, or 3°, or 4°, or 5°, or 10°, or 15°, or 20°, or 30°, or 40°, or 45°, or 50°, or 60° from a transversal extension of the body towards the bottom end.

In one embodiment one or more nozzles are located at the bottom end for achieving additional lubrication and cooling from different directions.

A further aspect of the presently disclosed invention relates to a method for manufacturing a thread cutting tap, using additive manufacturing, e.g. by means of a three-dimensional printing device, comprising the steps:
a) creating or providing a three-dimensional model of the thread cutting tap;
b) converting the model into a series of thin slices, wherein the slices are perpendicular to the longitudinal extension of the tap;
c) printing the slices as successive layers of metal, thereby shaping the thread cutting tap.

The inventors have realized that with additive manufacturing techniques, such as three-dimensional printing, it is possible to achieve complex internal structures, for example the abovementioned grid structures and/or hollow interior and/or cooling channels and nozzles in different shapes and sizes. Conventional manufacturing techniques, for example molding or drilling a blank, are not capable of creating these complex structures. Preferable the metal is selected from the group of titanium, stainless steel, tool steel, high-speed steel or cobalt high-speed steel. Titanium alloyed with other metals may also be used. Preferable, the metal is supplied to the three-dimensional printer in powder form.

The above method may also comprise the step: polishing the cutting edges, thereby obtaining sharp cutting edges for for cutting a thread of an opening. If the three-dimensional printer is not capable of manufacturing cutting edges that are sufficiently sharp for tapping, the cutting edges may have to be polished in an additional step.

The present invention also relates to a lightweight thread cutting tap, manufactured according to the description above, wherein at least a part of the tap is a grid structure, said grid structure comprising a solid portion of straight and/or curved bars, and a hollow portion of sections between the bars, wherein the solid portion constitutes less than 50%, or less than 45%, or less than 45%, or less than 40%, or less than 35%, or less than 30%, or less than 25%, or less than 20%, or less than 15%, or less than 10%, or less than 9%, or less than 8%, or less than 7%, or less than 6%, or less than 5%, or less than 4%, or less than 3%, or less than 2%, or less than 1% of the total volume of the grid structure.

### Examples

Fig. 1 shows a front view of an embodiment of the presently disclosed thread cutting tap 1. In the threaded portion 3, extending into the shaft 13, there are helically shaped removal flutes 7. In the sidewall of the body in level with the threaded portion 3 there are nozzles 8. The threaded portion 3 has cutting edges 5 and flank portions 6 and helically shaped chip removal flutes 7. The tap 1 also has a connector portion 2 to be connected to a tool, and a plane bottom end 4. In this example the shaft 13 is shown with a substantially flat exterior surface 12.

In fig. 2 a cross section of an embodiment of a thread cutting tap 1 similar to the tap in fig. 1 is shown. It can be seen that the tap has a hollow interior 10 and a sidewall 9. The sidewall 9 in this example is a grid structure. Furthermore, the grid structure in this example is sealed with an interior surface 11 and an exterior surface 12.

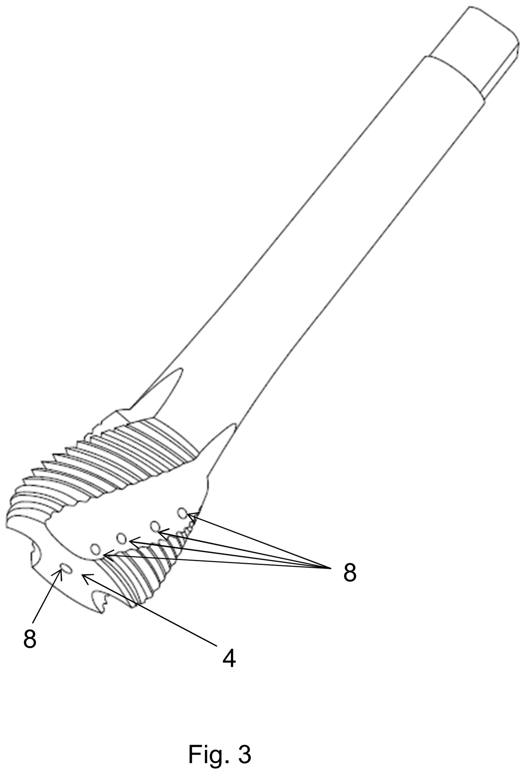

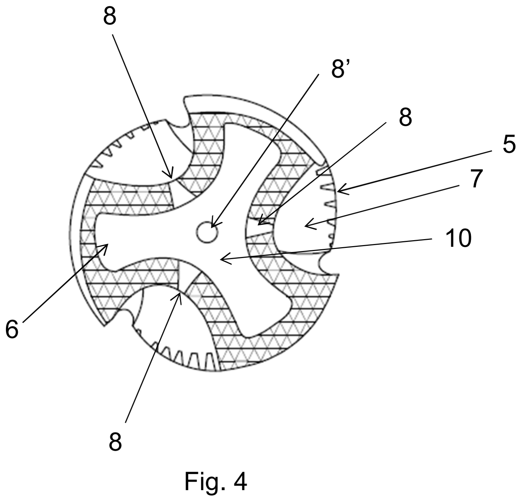

Fig. 3 shows a perspective view from the front and below of an embodiment of a thread cutting tap 1 with helically shaped chip removal flutes. In fig. 4 also the underside of the bottom end 4 is visible. A number of nozzles 8, 8' are visible; the nozzles are placed in the sidewall of the helically shaped chip removal flutes 7 and in the bottom end 4.

Fig. 4 shows a cross section of the threaded portion 3 of an embodiment of a thread cutting tap 1. The cross section is perpendicular to the longitudinal extension of the body. The threaded portion 3 has cutting edges 5, flank portions 6 and a hollow interior 10. In this example, since the body has a hollow interior, the flank portions are partly hollow. A nozzle 8' is illustrated connecting to the bottom end 4. Cone shaped nozzles 8 are shown that connect the hollow interior 10 with the chip removal flutes.

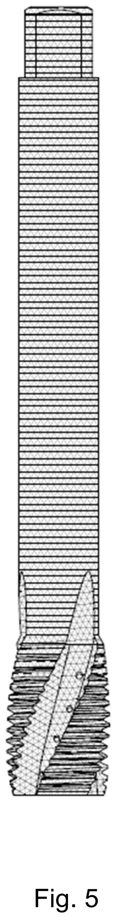

Fig. 5 is similar to fig. 1 i.e. showing a front view of an embodiment of the presently disclosed thread cutting tap 1. In this example the body of the tap does not have a flat exterior surface. Instead the grid structure is directly exposed to illustrate the grid structure.

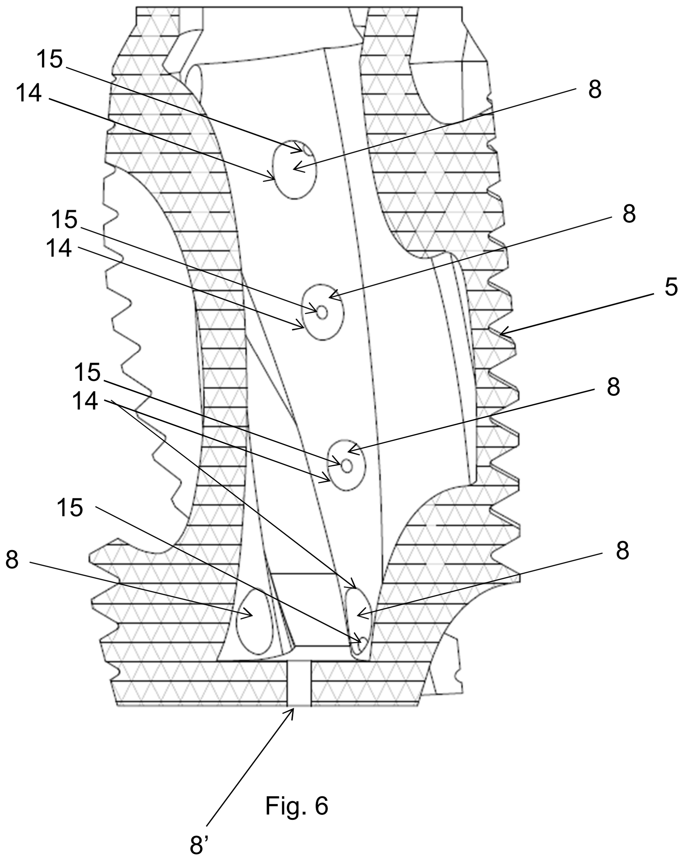

Fig. 6 is a detailed view of a cross-section of a threaded portion 3 of a tap 1 according to the presently disclosed invention. In this example it can be noted that the nozzles 8 are configured to direct the flow of lubricant/coolant in different directions. This is illustrated by the placement of the nozzle outlets 15 in relation to the nozzle inlets 14. The upper nozzle is configured to direct lubricant upwardly, the two middle nozzles are configured to direct lubricant straight out, substantially perpendicular to the longitudinal extension of the thread cutting tap, whereas the bottom nozzle is configured to direct lubricant downwardly. Up and down are referred to as the connector portion and the threaded portion, respectively.

### Further details of the invention

The invention will now be described in further detail with reference to the following items:
1. A thread cutting tap having a body, comprising at a first end a connector portion, and at a second end a threaded portion for cutting a thread of an opening in which said threaded portion is to be introduced, said threaded portion terminating in a bottom end, said threaded portion having at least two cutting edges in the circumferential direction of said body, each of said cutting edges being an integral peripheral part of a flank portion extending substantially radially from the longitudinal extension of said body, and a plurality of chip removal flutes between said flanks, said flutes extending in the longitudinal direction from said bottom end.
2. The thread cutting tap according to any of the preceding items, said thread cutting tap having a hollow interior, wherein the body forms a sidewall.
3. The thread cutting tap according to any of the preceding items, wherein the thickness of the sidewall is in the range of 0.1 mm - 3.0 mm, such as in the range of 0.1 mm - 1.0 mm, or in the range of 0.5 mm - 1.0 mm, or in the range of 1.0 mm - 2.0 mm, or in the range of 1.0 mm - 3.0 mm, for example 0.1 mm, or 0.5 mm, or 1.0 mm, or 1.1 mm, or 1.2 mm, or 1.3 mm, or 1.4 mm, or 1.5 mm, or 2.0 mm, or 2.5 mm, or 3.0 mm.
4. The thread cutting tap according to any of the preceding items, wherein the thickness of the sidewall is less than 30% of the radius of the tap, or less than 25% of the radius of the tap, or less than 20% of the radius of the tap, or less than 15% of the radius of the tap, or less than 10% of the radius of the tap, or less than 5% of the radius of the tap.
5. The thread cutting tap according to any of the preceding items, wherein at least a part of the body is a grid structure, said grid structure comprising a solid portion of straight and/or curved bars, and a hollow portion of sections between the bars.
6. The thread cutting tap according to any of the preceding items, wherein the thickness of the grid structure is less than 5.0 mm, or less than 4.5 mm, or less than 4.0 mm, or less than 3.5 mm, or less than 3.0 mm, or less than 2.5 mm, or less than 2.0 mm, or less than 1.5 mm, or less than 1.0 mm, or less than 0.5 mm.
7. The thread cutting tap according to any of items 5-6, wherein the grid structure forms a triangular pattern, and/or a hexagonal pattern, and/or a three-dimensional pattern, or a combination.
8. The thread cutting tap according to any of items 5-7, wherein the solid portion constitutes less than 50%, or less than 45%, or less than 45%, or less than 40%, or less than 35%, or less than 30%, or less than 25%, or less than 20%, or less than 15%, or less than 10%, or less than 9%, or less than 8%, or less than 7%, or less than 6%, or less than 5%, or less than 4%, or less than 3%, or less than 2%, or less than 1% of the total volume of the grid structure.
9. The thread cutting tap according to any of items 5-8, wherein the grid structure is reinforced in one or more selected sections of the body, such that the solid portion of the volume of the grid structure for the section is in the range of 0-50%, such as in the range of 0-5%, or in the range of 0-10%, or in the range of 0-15%, or in the range of 0-20%, or in the range of 0-25%, or in the range of 0-30%, or in the range of 0-40%, or in the range of 0-50%, or in the range of 1-5%, or in the range of 1-10%, or in the range of 1-10%, or in the range of 1-15%, or in the range of 1-20%, or in the range of 1-25%, or in the range of 1-30%, or in the range of 1-40%, or in the range of 1-50%, for example 1%, or 2%, or 2%, or 3%, or 4%, or 5%, or 10%, or 20%, or 30%, or 40%, or 50% higher than the average for the whole grid structure.
10. The thread cutting tap according to any of items 5-9, wherein the grid structure is made less dense in one or more selected sections of the body, such that the solid portion of the volume of the grid structure for the section is in the range of 0-50%, such as in the range of 0-5%, or in the range of 0-10%, or in the range of 0-15%, or in the range of 0-20%, or in the range of 0-25%, or in the range of 0-30%, or in the range of 0-40%, or in the range of 0-50%, or in the range of 1-5% or in the range of 1-10%, or in the range of 1-10%, or in the range of 1-15%, or in the range of 1-20%, or in the range of 1-25%, or in the range of 1-30%, or in the range of 1-40%, or in the range of 1-50%, for example 1%, or 2%, or 2%, or 3%, or 4%, or 5%, or 10%, or 20%, or 30%, or 40%, or 50% lower than the average for the whole grid structure.
11. The thread cutting tap according to any of the preceding items, wherein the thread cutting tap is made of a material selected from the group of titanium, stainless steel, tool steel, high-speed steel or cobalt high-speed steel.
12. The thread cutting tap according to any of the preceding items, wherein the chip removal flutes are helically shaped.
13. The thread cutting tap according to any of the preceding items, wherein the chip removal flutes are straight.
14. The thread cutting tap according to any of the preceding items, further comprising one or more nozzles in the sidewall in fluid connection with the hollow interior of the thread cutting tap, for directing and/or controlling the flow of a lubricant and/or coolant from the hollow interior.
15. The thread cutting tap according to item 14, wherein one or more nozzles are configured to direct the flow of lubricant/coolant away from the cutting edges towards the connector portion, thereby transporting chips backward in the longitudinal working direction of the tap.
16. The thread cutting tap according to item 14, wherein one or more nozzles are configured to direct the flow of lubricant/coolant away from the cutting edges towards the bottom end, thereby transporting chips forward in the longitudinal working direction of the tap.
17. The thread cutting tap according to any of items 14-16, wherein one or more nozzles are located in the sidewall towards each chip removal flute.
18. The thread cutting tap according to any of items 14-17, wherein one or more nozzles are configured to lubricate the cutting edges.
19. The thread cutting tap according to any of items 14-18, wherein one or more nozzles are configured to transport chips away from the opening.
20. The thread cutting tap according to any of items 14-19, wherein one or more nozzles are located at the bottom end.
21. The thread cutting tap according to any of items 14-20, wherein one or more nozzles are configured to direct the flow of lubricant/coolant away from the cutting edges towards the connector portion, thereby transporting chips backward in the longitudinal working direction of the tap, and wherein one or more nozzles are directed in a direction perpendicular to the longitudinal extension of the body.
22. The thread cutting tap according to any of items 14-21, wherein the outlet diameter of the nozzle(s) is less than 2.0 mm, or less than 1.9 mm, or less than 1.8 mm, or less than 1.7 mm, or less than 1.6 mm, or less than 1.5 mm, or less than 1.4 mm, or less than 1.3 mm, or less than 1.2 mm, or less than 1.1 mm, or less than 1.0 mm, or less than 0.9 mm, or less than 0.8 mm, or less than 0.7 mm, or less than 0.6 mm, or less than 0.5 mm, or less than 0.4 mm, or less than 0.3 mm, or less than 0.2 mm, or less than 0.1 mm, or less than 0.4 mm.
23. The thread cutting tap according to any of items 14-22, wherein the inlet diameter of the nozzle(s) is greater than 1.0 mm, or less than 1.1 mm, or less than 1.2 mm, or less than 1.3 mm, or less than 1.4 mm, or less than 1.5 mm, or less than 1.7 mm, or less than 2.0 mm, or less than 2.5 mm, or less than 3.0.
24. The thread cutting tap according to any of items 14-23, wherein an inlet diameter is greater than an outlet diameter of the nozzles.
25. The thread cutting tap according to any of items 14-24, wherein the ratio between an outlet diameter and an inlet diameter of the nozzle(s) is from about 1:2 to about 1:10.
26. The thread cutting tap according to any of items 14-25, wherein a plurality of nozzles are adjacent to the cutting edges.
27. The thread cutting tap according to any of items 14-26, wherein at least one nozzle is cone shaped.
28. The thread cutting tap according to item 27, wherein the opening angle of the cone is in the range of 5° - 20°, such as in the range of 5° - 10°, or in the range of 5° - 15°, or in the range of 10° - 15°, or in the range of 10° - 20°, or in the range of 15° - 20°, for example 5°, or 6°, or 7°, or 8°, or 9°, or 10°, or 11°, or 12°, or 13°, or 14°, or 15°, or 16°, or 17°, or 18°, or 19°, or 20°.
29. The thread cutting tap according to any of items 27-28, wherein the vertex of the cone points in an angle between 1° and 5°, or between 1° and 10°, or between 1° and 20°, or between 1° and 30°, or between 1° and 45°, or between 1° and 60°, or between 10° and 45°, or between 20° and 60°, for example 1°, or 2°, or 3°, or 4°, or 5°, or 10°, or 15°, or 20°, or 30°, or 40°, or 45°, or 50°, or 60° from a transversal extension of the body towards the connector portion.
30. The thread cutting tap according to any of items 27-28, wherein the vertex of the cone points in an angle between 1° and 5°, or between 1° and 10°, or between 1° and 20°, or between 1° and 30°, or between 1° and 45°, or between 1° and 60°, or between 10° and 45°, or between 20° and 60°, for example 1°, or 2°, or 3°, or 4°, or 5°, or 10°, or 15°, or 20°, or 30°, or 40°, or 45°, or 50°, or 60° from a transversal extension of the body towards the bottom end.
31. The thread cutting tap according to any of the preceding items, further comprising a shaft located between the threaded portion and the connector portion.
32. The thread cutting tap according to any of the preceding items, said shaft having a substantially flat interior surface.
33. The thread cutting tap according to any of the preceding items, said shaft having a substantially flat exterior surface.
34. A method for manufacturing a thread cutting tap, using additive manufacturing, such as by means of a three-dimensional printing device, comprising the steps:
   a) creating a three-dimensional model of the thread cutting tap;
   b) converting the model into a series of thin slices, wherein the slices are perpendicular to the longitudinal extension of the thread cutting tap;
   c) printing the slices as successive layers of metal, thereby shaping the thread cutting tap.
35. The method according to item 34, wherein the thread cutting tap is the thread cutting tap according to any of items 1-33.
36. The method according to any of items 34-35, wherein the metal is selected from the group of titanium, stainless steel, tool steel, high-speed steel or cobalt high-speed steel.
37. The method according to any of items 34-36, wherein the metal is supplied in powder form.
38. The method according to any of items 34-37, further comprising the step of polishing the cutting edges, thereby obtaining sharp cutting edges for for cutting a thread of an opening.
39. A lightweight thread cutting tap, manufactured according to any of items 34-38, wherein at least a part of the tap is a grid structure, said grid structure comprising a solid portion of straight and/or curved bars, and a hollow portion of sections between the bars, wherein the solid portion constitutes less than 50%, or less than 45%, or less than 45%, or less than 40%, or less than 35%, or less than 30%, or less than 25%, or less than 20%, or less than 15%, or less than 10%, or less than 9%, or less than 8%, or less than 7%, or less than 6%, or less than 5%, or less than 4%, or less than 3%, or less than 2%, or less than 1% of the total volume of the grid structure.

### Embodiments

1. A thread cutting tap having a body, comprising at a first end a connector portion, and, at a second end, a threaded portion for cutting a thread of an opening in which said threaded portion is to be introduced, said threaded portion terminating in a bottom end, said threaded portion having
   - at least two cutting edges in the circumferential direction of said body, each of said cutting edges being an integral peripheral part of a flank portion extending substantially radially from the longitudinal extension of said body; and
   - a plurality of chip removal flutes between said flanks, said flutes extending in the longitudinal direction from said bottom end,
   said thread cutting tap having a hollow interior, wherein the body forms a sidewall and the hollow interior extends into the threaded portion.
2. The thread cutting tap according to any of the preceding embodiments, wherein at least a part of the body is a grid structure, said grid structure comprising a solid portion of straight and/or curved bars, and a hollow portion of sections between the bars.
3. The thread cutting tap according to any of the preceding embodiments, wherein the thickness of the grid structure is less than 3.0 mm.
4. The thread cutting tap according to any of embodiments 2-3, wherein the grid structure forms a triangular pattern, and/or a hexagonal pattern, and/or a three-dimensional pattern, or a combination.
5. The thread cutting tap according to any of embodiments 2-4, wherein the solid portion constitutes less than 20% of the total volume of the grid structure.
6. The thread cutting tap according to any of embodiments 2-5, wherein the grid structure is reinforced in one or more selected sections of the body, such that the solid portion of the volume of the grid structure for the section is in the range of 0-50% higher than the average for the whole grid structure.
7. The thread cutting tap according to any of embodiments 2-6, wherein the grid structure is made less dense in one or more selected sections of the body, such that the solid portion of the volume of the grid structure for the section is in the range of 1-50% lower than the average for the whole grid structure.
8. The thread cutting tap according to any of the preceding embodiments, wherein the chip removal flutes are helically shaped or substantially straight.
9. The thread cutting tap according to any of the preceding embodiments, further comprising one or more nozzles in the sidewall in fluid connection with the hollow interior of the thread cutting tap, for directing and/or controlling the flow of a lubricant and/or coolant from the hollow interior.
10. The thread cutting tap according to embodiment 9, wherein one or more nozzles are configured to direct the flow of lubricant/coolant away from the cutting edges towards the connector portion, thereby transporting chips backward in the longitudinal working direction of the tap.
11. The thread cutting tap according to embodiment 9, wherein one or more nozzles are configured to direct the flow of lubricant/coolant away from the cutting edges towards the bottom end, thereby transporting chips forward in the longitudinal working direction of the tap.
12. The thread cutting tap according to any of embodiments 9-11, wherein one or more nozzles are located in the sidewall towards each chip removal flute.
13. The thread cutting tap according to any of embodiments 9-12, wherein one or more nozzles are configured to transport chips away from the opening.
14. The thread cutting tap according to any of embodiments 9-13, wherein one or more nozzles are located at the bottom end.
15. The thread cutting tap according to any of embodiments 9-14, wherein one or more nozzles are configured to direct the flow of lubricant/coolant away from the cutting edges towards the connector portion, thereby transporting chips backward in the longitudinal working direction of the tap, and wherein one or more nozzles are directed in a direction perpendicular to the longitudinal extension of the body.
16. The thread cutting tap according to any of embodiments 9-15, wherein an inlet diameter is greater than an outlet diameter of the nozzles.
17. The thread cutting tap according to any of embodiments 9-16, wherein a plurality of nozzles are adjacent to the cutting edges.
18. The thread cutting tap according to any of embodiments 9-17, wherein at least one nozzle is cone shaped.
19. A method for manufacturing a thread cutting tap, using additive manufacturing, such as by means of a three-dimensional printing device, comprising the steps:
   a) creating a three-dimensional model of the thread cutting tap;
   b) converting the model into a series of thin slices, wherein the slices are perpendicular to the longitudinal extension of the thread cutting tap;
   c) printing the slices as successive layers of metal, thereby shaping the thread cutting tap,
   wherein the thread cutting tap is the thread cutting tap according to any of embodiments 1-18.
20. A lightweight thread cutting tap, manufactured according to embodiment 19, wherein at least a part of the tap is a grid structure, said grid structure comprising a solid portion of straight and/or curved bars, and a hollow portion of sections between the bars, wherein the solid portion constitutes less than 20% of the total volume of the grid structure.

## Claims

1. A method for manufacturing a thread cutting tap, using additive manufacturing, such as by means of a three-dimensional printing device, comprising the steps:
d) creating a three-dimensional model of the thread cutting tap;
e) converting the model into a series of thin slices, wherein the slices are perpendicular to the longitudinal extension of the thread cutting tap;
f) printing the slices as successive layers of metal or sintered carbides, or cemented carbides, thereby shaping the thread cutting tap.

2. The method according to claim 34, wherein the metal is selected from the group of titanium, stainless steel, tool steel, high-speed steel, cobalt high-speed steel, or titanium alloyed with other metals, such as iron, aluminum, vanadium or molybdenum.

3. The method according to claim 34 or 36, wherein the metal or carbide is supplied in powder form.

4. The method according to any of claims 34-37, further comprising the step of polishing the cutting edges, thereby obtaining sharp cutting edges for cutting a thread of an opening.

5. The method according to any of claims 34-38, wherein the manufactured thread cutting tap comprises a body, and wherein a part of the body is a grid structure comprising a solid portion of straight and/or curved bars, and a hollow portion of sections between the bars.

6. The method according to claim 5, wherein the solid portion constitutes less than 50%, or less than 45%, or less than 45%, or less than 40%, or less than 35%, or less than 30%, or less than 25%, or less than 20%, or less than 15%, or less than 10%, or less than 9%, or less than 8%, or less than 7%, or less than 6%, or less than 5%, or less than 4%, or less than 3%, or less than 2%, or less than 1% of the total volume of the grid structure.

7. The method according to claim 5 or 6, wherein the solid portion of the grid structure is reinforced in one or more selected sections of the body.

8. The method according to claim 7, wherein the solid portion of the grid structure is reinforced in one or more selected sections of the body such that the solid portion of the volume of the grid structure for the section is in the range of 1-5%, or in the range of 1-10%, or in the range of 1-10%, or in the range of 1-15%, or in the range of 1-20%, or in the range of 1-25%, or in the range of 1-30%, or in the range of 1-40%, or in the range of 1-50%, for example 1%, or 2%, or 2%, or 3%, or 4%, or 5%, or 10%, or 20%, or 30%, or 40%, or 50% higher than the average for the whole grid structure.

9. The method according to any of claims 5-8, wherein a thickness of the grid structure is less than 5.0 mm, or less than 4.5 mm, or less than 4.0 mm, or less than 3.5 mm, or less than 3.0 mm, or less than 2.5 mm, or less than 2.0 mm, or less than 1.5 mm, or less than 1.0 mm, or less than 0.5 mm.

10. The method according to any of claims 5-9, wherein the grid structure may form a triangular pattern, and/or a hexagonal pattern, and/or a three-dimensional pattern, or a combination thereof.

11. The method according to any of claims 1-10, wherein the manufactured thread cutting tap comprises a sidewall

12. The method according to claim 11, wherein the sidewall has one or more nozzles in the sidewall in fluid connection with the hollow interior of the thread cutting tap.

13. The method according to claim 11 or 12, wherein the sidewall has a thickness of the sidewall in the range of 0.1 mm - 3.0 mm, such as in the range of 0.1 mm - 1.0 mm, or in the range of 0.5 mm - 1.0 mm, or in the range of 1.0 mm - 2.0 mm, or in the range of 1.0 mm - 3.0 mm, for example 0.1 mm, or 0.5 mm, or 1.0 mm, or 1.1 mm, or 1.2 mm, or 1.3 mm, or 1.4 mm, or 1.5 mm, or 2.0 mm, or 2.5 mm, or 3.0 mm.

14. The method according to any of claims 5-13 wherein coolant and/or lubricant is provided in the hollow portion for providing a pressure from the coolant and/or lubricant on the body for serving as a counter pressure from the interior of the body.

15. The method according to any of claims 11-14, wherein the thickness of the sidewall is less than 60% of the radius of the tap, or less than 50% of the radius of the tap, or less than 40% of the radius of the tap, or less than 30% of the radius of the tap, or less than 25% of the radius of the tap, or less than 20% of the radius of the tap, or less than 15% of the radius of the tap, or less than 10% of the radius of the tap, or less than 5% of the radius of the tap.
